Europäisches Patentamt

European Patent Office

Office européen des brevets

(19)

(11) Veröffentlichungsnummer: **0 244 546**
**B1**

# (12) EUROPÄISCHE PATENTSCHRIFT

(45) Veröffentlichungstag der Patentschrift:
22.03.89

(51) Int. Cl.⁴: **C08G 63/22, B01J 3/00**

(21) Anmeldenummer: **86730071.7**

(22) Anmeldetag: **29.04.86**

(54) **Verfahren und Vorrichtung zur Herstellung hochmolekularer Polyester.**

(43) Veröffentlichungstag der Anmeldung:
**11.11.87 Patentblatt 87/46**

(45) Bekanntmachung des Hinweises auf die Patenterteilung:
**22.03.89 Patentblatt 89/12**

(84) Benannte Vertragsstaaten:
**AT BE CH DE FR GB IT LI NL**

(56) Entgegenhaltungen:
**DE-A- 1 503 668**
**DE-A- 2 315 492**
**DE-A- 2 809 113**

**CHEMIEFASERN/TEXTIL-INDUSTRIE, Juni 1977,
Seiten 525-526; W. KARASIAK et al.: "Kontinuierliche
Polyesteranlagen für den wahlweisen Einsatz von DMT
oder TPA"**

(73) Patentinhaber: **KARL FISCHER INDUSTRIEANLAGEN
GMBH, Holzhauser Strasse 157, D-1000 Berlin 27(DE)**

(72) Erfinder: **Schulz van Endert, Eike, Olafstrasse 85,
D-1000 Berlin 28(DE)**

(74) Vertreter: **Pfenning, Meinig & Partner,
Kurfürstendamm 170, D-1000 Berlin 15(DE)**

## Beschreibung

Die Erfindung betrifft ein Verfahren zur Herstellung hochmolekularer Polyester wie Polyäthylenterephthalat, Polybutylenterephthalat sowie deren Copolymere entsprechend dem Oberbegriff des Hauptanspruchs und eine Vorrichtung zur Durchführung des Verfahrens.

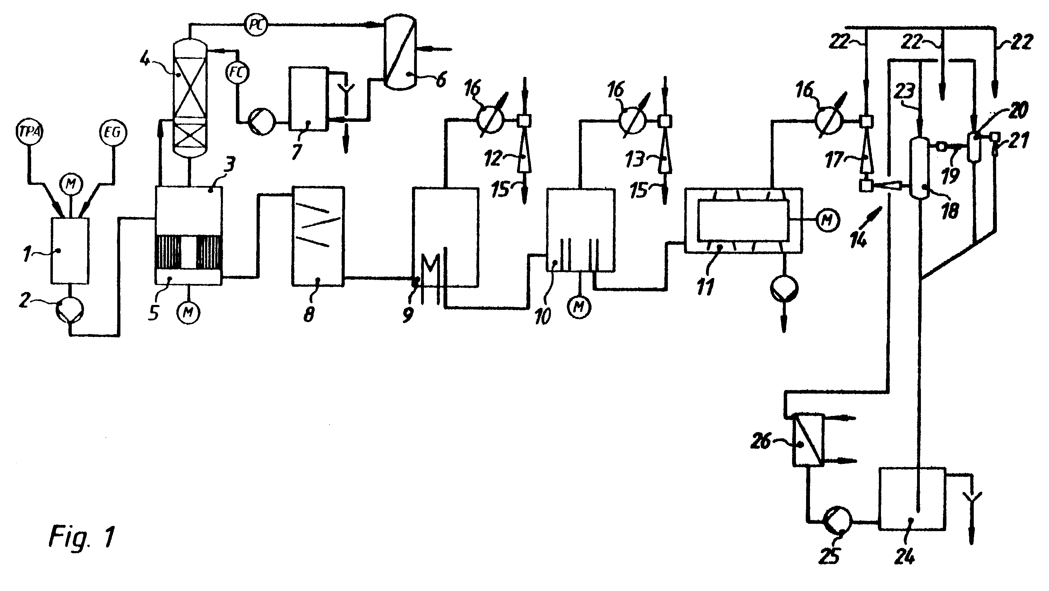

Ein bekanntes Verfahren zur kontinuierlichen Herstellung von Polyäthylenterephthalat (PETP) ausgehend von Terephthalsäure und Äthylenglykol soll unter Zugrundelegung einer Vorrichtung nach Figur 1 beschrieben werden. In einer Anmischvorrichtung 1 werden Terephthalsäure und Äthylenglykol in einem für die Veresterung geeigneten Verhältnis eingeführt, über eine Pumpe 2 in den Veresterungsreaktor 3 gepumpt und dort zu 80–90% in Bis(2-hydroxiäthyl)-terephthalat bei Temperaturen zwischen 240° und 280°C, sowie Drücken zwischen 0,1 und 8 bar umgesetzt. Das reaktionskinetisch entstehende Wasser in Form von Dampf wird zusammen mit freiwerdendem Glykoldampf in die Trennkolonne 4 geleitet, der geläuterte Wasserdampf wird im oberen Teil der Kolonne 4 abgezogen und in einem Kondensator 6 kondensiert. Das Kondensat wird in einem Behälter 7 gesammelt und über eine Pumpe der Trennkolonne 4 teilweise wieder als Rückfluß zugeführt, während das Reaktionswasser aus dem Behälter 7 abläuft. Das Reaktionsprodukt gelangt in einen weiteren Reaktor 8, in dem die Veresterungsreaktion größtenteils abgeschlossen wird. Reaktionswasserdampf und freigesetztes Glykol werden total kondensiert und einer Rückgewinnung zugeführt. Das Veresterungsprodukt gelangt in einen ersten als Entgasungsgefäß ausgebildeten Vakuumreaktor 9, in dem sich Heizschlangen befinden, die den Enthalpieverlust des Vorkondensates ausgleichen, der aus der Verdampfung des Glykols, der Oligomere und restlichen Wassers bei Entspannung resultiert. Die Vorkondensation wird in einem zweiten Vakuumreaktor 10 fortgesetzt, dessen Rührkaskadierung die Polymerbildung und damit den Reaktionsglykolaustrieb günstig beeinflußt.

Die Endkondensation erfolgt in einem dritten Vakuumreaktor 11, der als rotierender Scheibenreaktor ausgebildet sein kann. Die fertige Polyesterschmelze wird am Reaktorauslaß durch eine Pumpe 12 entnommen und einer Spinnvorrichtung zugeführt. Jedem Vakuumreaktor 9, 10, 11 ist ein Vakuumaggregat 12, 13, 14 zur Erzeugung der verschiedenen Vakua im Bereich von 100 bis 0,1 mbar zugeordnet. Die Vakuumaggregate 12, 13 sind beispielsweise als Äthylenglykol-Flüssigkeitspumpen ausgebildet, wobei das aus den Strahlpumpen 12, 13 austretende Glykol 15 im Kreislauf gefahren und von Zeit zu Zeit in einer Rückgewinnung wieder aufgearbeitet wird. Zwischen Vakuumreaktor 9, 10, 11 und Vakuumaggregat 12, 13, 14 ist ein Sprühkondensator 16 geschaltet, in dem sich die aus dem jeweiligen Vakuumreaktor austretenden Glykoldämpfe und Oligomere niederschlagen. Als Kühlflüssigkeit dient dabei Glykol, das über Düsen eingespritzt wird. Das niedergeschlagene Glykol wird ebenfalls zu einem Sammelbehälter geführt. Das das Vakuum im Endkondensationsreaktor 11 erzeugende Vakuumaggregat 14 ist mehrstufig aufgebaut, d.h. die mit dem Sprühkondensator 16 verbundene Strahlpumpe 17, die auch in sich mehrstufig ausgeführt sein kann und die vorzugsweise als Dampfstrahlpumpe ausgebildet ist, ist an einen Mischkondensator 18 angeschlossen, dessen Auslaß in eine zweite Strahlpumpe 19 mündet, die wiederum in einen zweiten Mischkondensator 20 führt, an dessen Auslaß eine dritte Strahlpumpe 21 angeschlossen ist. Die Strahlpumpen 17, 19, 21 werden mit Frischdampf 22 gespeist, während die Mischkondensatoren 18, 20 mit Kühlwasser 23 arbeiten, welches teils aus dem Kondensat der Mischkondensatoren 18, 20 und der Strahlpumpe 21 gewonnen wird, teils aber auch als Frischwasser zur Vermeidung von Aufkonzentration im Kreislauf zugeführt werden muß. Das Kondensat wird in dem Behälter 24 gesammelt und über eine Pumpe 25 einem Wärmetauscher 26 oder dergleichen zugeführt.

Der mit Glykol, Aldehyden und sonstigen Abbauprodukten angereicherte Überlauf aus dem barometrischen Behälter 24 gelangt in das Abwassersystem.

Selbstverständlich können als Vakuumaggregate auch andere Vorrichtungen eingesetzt werden, beispielsweise mechanische Vakuumpumpenstände mit rotierenden Pumpen oder Glykoldampf- und Flüssigkeitsstrahlpumpen, sofern diese den spezifischen Anforderungen des Produktes Rechnung tragen und auch die vorgeschalteten Einrichtungen zur Kondensation und Abscheidung der Reaktionsdämpfe und Oligomeren sachgerecht ausgeführt sind.

Die bekannten Verfahren zeichnen sich u.a. durch einen relativ schlechten Wärmewirkungsgrad aus, der etwa bei 30% liegt. Weiterhin treten bei den bekannten Verfahren in starkem Maße unerwünschte Seitenströme auf, die zu Abwasserverschmutzung bzw. in einer Rückgewinnung oder Abwasseraufbereitung zu erhöhter Belastung führen. Außerdem müssen alle bekannten Vakuumeinrichtungen durch zusätzliche Energiequellen von außen betrieben werden und verlangen einen hohen Wartungs- und Investitionsaufwand.

Der Erfindung liegt daher die Aufgabe zugrunde, die bekannten Verfahren zur Herstellung von hochmolekularen Polyestern dahingehend zu verbessern, daß der Gesamt-Wirkungsgrad erhöht wird, d.h. durch verminderten Einsatz von Primärenergie die Anlage ökonomisch zu betreiben. Weiterhin soll die Abwasserbelastung minimalisiert werden und die Betriebssicherheit erhöht werden.

Diese Aufgabe wird erfindungsgemäß durch die kennzeichnenden Merkmale des Hauptanspruchs gelöst.

Es wurde gefunden, daß der Prozeßdampf aus der Veresterungsreaktionsstufe zum Betrieb von Wasserdampfstrahlpumpen mit guter Betriebssicherheit verwendet werden kann, wodurch der Wirkungsgrad erhöht wird. Auch zur Kondensation des Treibstromes der Strahlpumpen erwies sich das aus dem Prozeßdampf gewonnene Prozeßwasser nach Entgasung als geeignet. Erfindungsgemäß tritt im Vergleich zu anderen Verfahren eine etwa um 60% verringerte Menge an Abwasser auf, was daraus resultiert, daß sich der gesamte Wasserhaushalt des Systems aus dem Prozeß selbst generiert, d.h., es sind keine zusätzlichen, aufbereiteten Wässer zur Vermeidung von Aufkonzentration des Kühlkreislaufes erforderlich. Durch das erfindungsgemäße Verfahren konnte der Gesamtwert der chemischen und biologischen Abwasserbelastung um etwa 40% verringert werden. Ein weiterer Vorteil der Erfindung liegt darin, daß die Durchmesser der engsten Querschnitte der Venturidüsen der Strahlpumpen größer gewählt werden konnten, da der Prozeßdampf mit einem Druck von 2 bis 3 bar Überdruck vorliegt, so daß sich die störungsfreie Betriebszeit der Strahlpumpen um ein Vielfaches verlängert, wodurch auf die sonst übliche doppelte Anordnung der Vakuumpumpen verzichtet werden kann.

Die Erfindung wird in der nachfolgenden Beschreibung anhand der in der Zeichnung dargestellten Vorrichtung näher erläutert. Es zeigen:

Fig. 1 eine Vorrichtung zur Durchführung des Verfahrens zur kontinuierlichen Herstellung von hochmolekularen Polyestern entsprechend dem Stand der Technik und

Fig. 2 eine schematische Darstellung der Vorrichtung entsprechend der Erfindung.

Fig. 3 eine weitere schematische Darstellung als Variante zur Fig. 2.

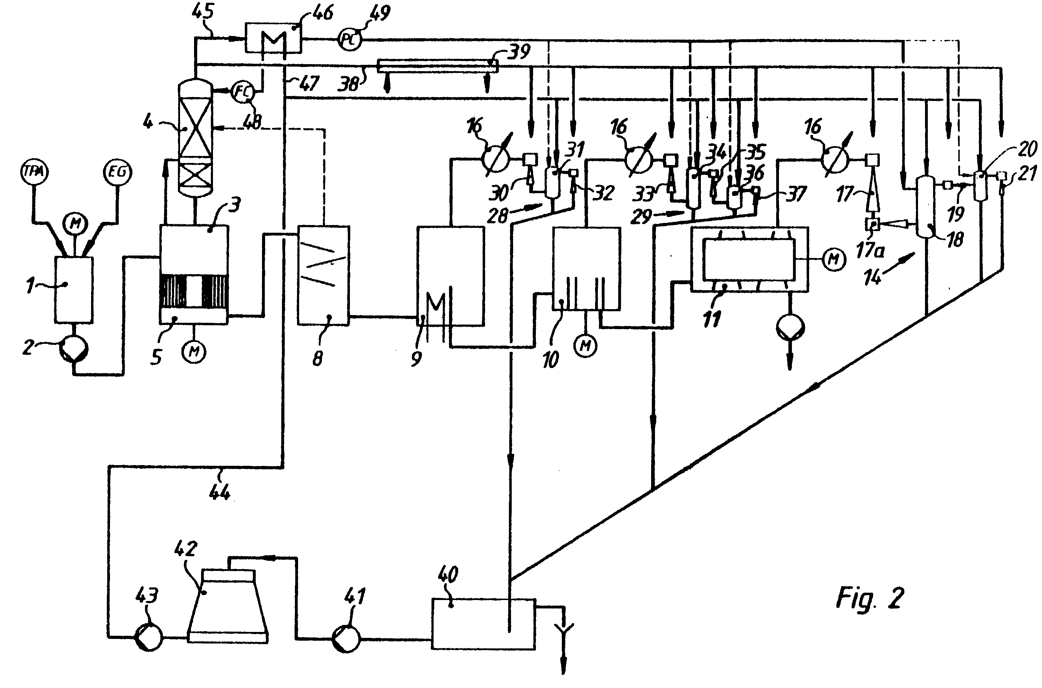

In der in Figur 2 gezeigten schematischen Darstellung der erfindungsgemäßen Vorrichtung werden für gleiche Teile wie in Fig. 1 die gleichen Bezugszeichen verwendet. Die das Vakuum in den Vakuumreaktoren 9, 10, zur Vorkondensation erzeugenden Vakuumaggregate 28, 29 sind ebenso wie das dem Vakuumreaktor 11 zur Endkondensation zugeordnete Vakuumaggregat 14 als Wasserdampfstrahlaggregate ausgebildet. Das dem ersten Vakuumreaktor 9 zugeordnete Vakuumaggregat 28 ist zweistufig ausgebildet und besteht aus einer mit dem Sprühkondensator verbundenen Dampfstrahlpumpe 30, einem mit ihr verbundenen Mischkondensator 31 und einer weiteren an den Auslaß des Mischkondensators 31 angeschlossenen Dampfstrahlpumpe 32.

Das Vakuumaggregat 29 des zweiten Vakuumreaktors 10 ist dreistufig und weist eine Strahlpumpe 33, einen daran angeschlossenen Mischkondensator 34, eine weitere Stufe aus Strahlpumpe 35 und Mischkondensator 36 und eine weitere Strahlpumpe 37 auf.

Der durch die Veresterung von Terephthalsäure und Äthylenglykol im Veresterungsreaktor 3 bzw. in beiden Veresterungsreaktoren 3, 8 erzeugte Wasserdampf entströmt als Prozeßdampf der Trennkolonne 4 und wird in zwei Ströme aufgeteilt, von denen der eine Strom in der Dampfspeiseleitung 38 als Treibstrom den Dampfstrahlpumpen 30, 32, 33, 35, 37, 17, 17a, 19, 21 zugeführt wird. Eine zusätzliche Heizung 39 kann für die Dampfspeiseleitung 38 vorgesehen sein, die den Prozeßdampf auf Temperaturen oberhalb der Siedetemperatur überhitzt, wodurch die Lebensdauer der Treibdampfdüsen der Strahlpumpen erhöht wird. Der sowohl in den Strahlpumpen als auch den Mischkondensatoren der Vakuumaggregate 28, 29, 14 kondensierte Prozeßdampf wird in einem barometrischen Auffangbehälter 40 gesammelt, über eine Pumpe 41 einem Kühlturm 42 zugeleitet, in dem das Wasser entgast und gekühlt wird. Eine Pumpe 43 pumpt das so behandelte Prozeßwasser in der Rückführleitung 44 in die Mischkondensatoren 31, 34, 36, 18, 20 der Vakuumaggregate 28, 29, 14, in denen es zur Kondensation des Treibdampfes verwendet wird. Die Spritz-, Verdunstungs- und Abschlammverluste des Kühlturms 42 werden durch das ständig neu produzierte Prozeßwasser aus dem von der Trennkolonne 4 gelieferten Prozeßdampf gedeckt. Das überschüssige Prozeßwasser wird am Behälter 40 aus dem Prozeß entfernt.

In die Leitung 45 des zweiten Teilstromes des aus der Trennkolonne 4 austretenden Prozeßdampfes ist ein Wärmetauscher 46 geschaltet, durch den über eine Abzweigleitung 47 von der Kreislaufleitung 44 ein Teilstrom des Prozeßwassers geführt wird, der auf Siedetemperatur erhitzt wird und über die Durchflußregelung 48 als Rückfluß in die Reaktionskolonne 4 geleitet wird. Hinter den Wärmetauscher 46 ist in die Leitung 45 eine Druckregelung 49 geschaltet, die den Druck im Reaktorsystem 3, 4 und in der Dampfspeiseleitung 38 für die Dampfstrahlpumpen konstant hält. Aus dem Wärmetauscher 46 tritt in der Leitung 45 Restdampf und Kondensat aus, der einem der Mischkondensatoren der Vakuumaggregate 28, 29, 14 der Vakuumreaktoren 9, 10, 11 oder einem separaten Mischkondensator 50, zur Totalkondensation eingeleitet wird.

Die Nutzung des Prozeßdampfes zur Vakuumerzeugung setzt voraus, daß die aus den Vakuumreaktoren abgesaugten Gase frei von Verunreinigungen, insbesondere frei von Oligomeren und Glykol sind. Den Vakuumaggregaten sind deshalb Sprühkondensatoren 16 und/oder Abscheider vorgeschaltet, in denen die aus den Vakuumreaktoren 9, 10, 11 austretenden Glykoldämpfe, die mit solchen Verunreinigungen angereichert sind, niedergeschlagen werden. Die Mitnahme dieser Stoffe in die Vakuumaggregate erfolgt dann lediglich nach dem Raoultschen Gesetz in gesättigter Form durch die sehr kleinen abgesaugten Gasmengen. Das in die Sprühkondensatoren über Düsen eingesprühte Äthylenglykol zum Niederschlagen der aus den Vakuumreaktoren austretenden Glykoldämpfe wird mit einer geeigneten Temperatur zwischen 10 bis 30°C im Kreislauf gefahren. Den Sprühkondensatoren 16 können nicht dargestellte Oligomerabscheider nachgeschaltet werden, die mit einem Abscheidevlies ausgestattet sein können, wobei oberhalb des Vliespaketes Äthylenglykol mit einer Temperatur zwischen 10 und 30°C eingesprüht wird und am unteren Ende zu einem Sammelbehälter abgeführt wird.

Beispiel 1:

In einer Vorrichtung nach Figur 1 wurde bei einer Erzeugung von 100 t/Tag Polyester ein spezifischer Wärmeverbrauch von 745 kW pro 1000 kg Fertigprodukt PETP ermittelt.

**Beispiel 2:**

In einer Vorrichtung nach der Figur 2 wurde bei einer Erzeugung von 100 t/Tag Polyester ein spezifischer Wärmeverbrauch von 595 kW pro 1000 kg Fertigprodukt PETP ermittelt.

Somit konnte bei Anwendung der Erfindung etwa 20 Prozent an Primärenergie gespart werden. In der Reaktionskolonne 3, 4 wird eine Nutzung des Prozeßdampfes von etwa 45% erreicht.

**Beispiel 3:**

In einer Vorrichtung nach Figur 1 wurde bei einer Erzeugung von 100 t/Tag Polyester ein spezifischer Kühlwasserverbrauch von 88 m³ pro 1000 kg Fertigprodukt PETP ermittelt.

**Beispiel 4:**

In einer Vorrichtung nach der Figur 2 wurde bei einer Erzeugung von 100 t/Tag Polyester ein spezifischer Kühlwasserverbrauch von 42 m³ pro 1000 kg Fertigprodukt PETP ermittelt.

Bei Anwendung der Erfindung konnten somit etwa 63% an Kühlwasser eingespart werden.

**Beispiel 5:**

In einer Vorrichtung nach Figur 1 wurde bei einer Erzeugung von 100 t/Tag Polyester eine spezifische Abwassermenge von 310 kg/1000 kg Fertigprodukt PETP ermittelt.

**Beispiel 6:**

In einer Vorrichtung nach Figur 2 wurde bei einer Erzeugung von 100 t/Tag Polyester eine spezifische Abwassermenge von 120 kg/1000 kg Fertigprodukt PETP ermittelt.

Bei Anwendung der Erfindung konnte die Abwassermenge bei annähernd gleicher Konzentration mit organischen Stoffen um mehr als 60% gesenkt werden.

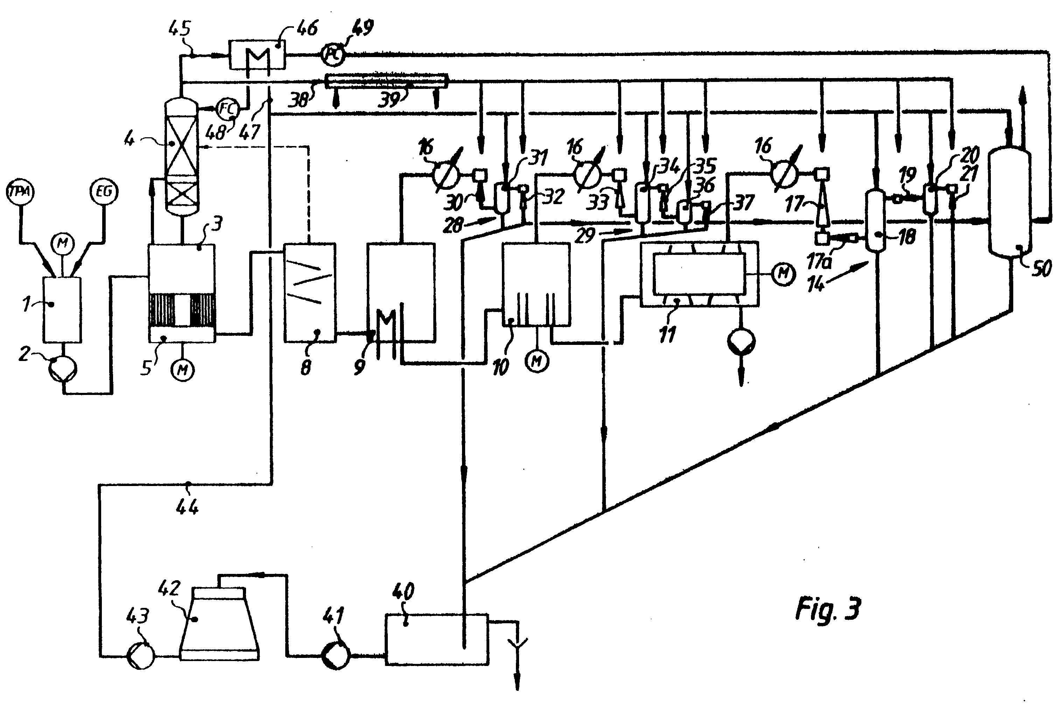

Eine weitere Vorrichtung ist in Figur 3 dargestellt, bei der die Restbrüden der Strahlpumpen 32, 37, 21 und der nicht genutzte Teil des Prozeßdampfes, der hinter dem Wärmetauscher 46 zur Verfügung steht, in einem Mischkondensator 50 niedergeschlagen und entgast werden, wobei das Kondensat wiederum dem Kreislauf über den barometrischen Behälter 40 zugeführt wird. Der Vorteil dieser Ausbildung liegt darin, daß aufgrund des höheren Temperaturniveaus im Kondensator 50 im Vergleich zum Kühlturm 42 die Ausscheidung von gasförmigen bzw. niedrigsiedenden Bestandteilen, die bei der Veresterung und Polykondensation entstehen, begünstigt wird und somit das Abwasser einer geringeren Belastung ausgesetzt ist. An Stelle des Kühlturmes 42 kann in diesem Fall auch ein Wasser/Wasserwärmetauscher treten.

## Patentansprüche

1. Verfahren zur Herstellung hochmolekularer Polyester, bei dem insbesondere aus Terephthalsäure und Alkylendiol eine pumpfähige Paste erzeugt wird, die in einer Veresterungsstufe einer zwei- oder mehrstufigen Reaktoranordnung verestert und anschliessend unter Vakuum in mindestens einem Vakuumreaktor polykondensiert wird, dadurch gekennzeichnet, dass das Vakuum für mindestens einen Vakuumreaktor mittels des Prozesswasserdampfes aus der Veresterungsstufe erzeugt wird.

2. Verfahren nach Anspruch 1, dadurch gekennzeichnet, dass der als Treibstrom dienende Prozessdampf in dem Vakuumaggregat kondensiert wird, wobei das entstandene Prozesswasser im Kreislauf als Kühlwasser dem Vakuumaggregat zur Kondensation des Prozessdampfes wieder zugeführt wird.

3. Verfahren nach Anspruch 1 oder 2, dadurch gekennzeichnet, dass der Prozessdampf aus der Veresterungsstufe mit einem Druck zwischen 0,1 und 8 bar zugeführt wird.

4. Verfahren nach Anspruch 3, dadurch gekennzeichnet, dass ein Kreislauf-Teilstrom des Prozesswassers aufgeheizt und der Reaktoranordnung als Rückfluss zugeführt wird.

5. Verfahren nach einem der Ansprüche 1 bis 4, dadurch gekennzeichnet, dass der aus der Veresterungsstufe austretende Prozessdampf in zwei Teilströme aufgeteilt wird, wobei der eine Teilstrom über einen Wärmetauscher den Kreislauf-Teilstrom aufheizt.

6. Verfahren nach Anspruch 5, dadurch gekennzeichnet, dass der aus dem Wärmetauscher austretende teilkondensierte Prozessdampf einem der Vakuumaggregate zur Totalkondensation zugeführt wird.

7. Verfahren nach einem der Ansprüche 1 bis 6, dadurch gekennzeichnet, dass die Brüden der jeweils letzten Wasserdampfstrahlpumpen aufweisenden Vakuumaggregate gemeinsam mit Prozessdampfresten separat totalkondensiert und entgast werden und dem Wasserkreislauf wieder zugeführt werden.

8. Verfahren nach einem der Ansprüche 1 bis 6, dadurch gekennzeichnet, dass das aus dem Vakuumaggregat austretende Prozesswasserkondensat in einem barometrischen Auffangbehälter gesammelt und über einen Kühlturm entgast und gekühlt wird.

9. Verfahren nach einem der Ansprüche 1 bis 7, dadurch gekennzeichnet, dass der Prozessdampf auf Temperaturen oberhalb der Siedetemperatur überhitzt wird.

10. Verfahren nach einem der Ansprüche 1 bis 9, dadurch gekennzeichnet, dass die Wasserdampfstrahlpumpe des mindestens eine Strahlpumpe aufweisenden Vakuumaggregats auf 290°C bis 330°C hochgeheizt wird.

11. Vorrichtung zur kontinuierlichen Herstellung hochmolekularer Polyester entsprechend dem Verfahren nach Anspruch 1 mit mindestens einem zweistufigen Reaktorsystem (3, 4, 8) zur Veresterung insbesondere von Terephthalsäure und einem Alkylendiol und mindestens einem Vakuumreaktor (9, 10, 11) zur Polykondensation, wobei zur Erzeugung des Vakuums in dem mindestens einen Vakuumreaktor ein Vakuumaggregat (14, 28, 29) vorgesehen ist, dadurch gekennzeichnet, daß das Vakuumaggregat (14, 28, 29) mindestens eine Wasserdampfstrahlpumpe (30, 32, 33, 35, 37, 17, 19, 21) aufweist, die über eine Dampfspeiseleitung (38) mit dem Reaktorsystem (3, 4, 8) verbunden ist und dass dem Vakuumaggregat (14, 28, 29) Sprühkondensatoren (16) und/oder Abscheider zur Reinigung der abzusaugenden Prozessgase oder -dämpfe vorgeschaltet sind.

12. Vorrichtung nach Anspruch 11, dadurch gekennzeichnet, daß der Wasserdampfstrahlpumpe ein Mischkondensator (31, 34, 36, 18, 20) zugeordnet ist, daß ein barometrischer Auffangbehälter (40) zur Sammlung des kondensierten Prozeßdampfes vorgesehen ist, der mit einem Kühlturm (42) verbunden ist und daß eine an den Kühlturm (42) angeschlossene Kreislaufleitung (44) zur Rückführung des gewonnenen Prozeßwassers zu den Mischkondensatoren vorgesehen ist.

13. Vorrichtung nach Anspruch 11 oder 12, dadurch gekennzeichnet, daß eine weitere, zumindest zu einem Mischkondensator (31, 34, 36, 18, 20) geführte Leitung (45) an das Reaktorsystem (3, 4) angeschlossen ist, in die ein Wärmetauscher (46) geschaltet ist, wobei eine Abzweigleitung (47) von der Kreislaufleitung (44) durch den Wärmetauscher (46) geführt ist und in dem Reaktorsystem (3, 4) mündet.

14. Vorrichtung nach einem der Ansprüche 11 bis 13, dadurch gekennzeichnet, daß der zwischen Vakuumreaktor (9, 10, 11) und Vakuumaggregat (28, 29, 14) geschaltete Sprühkondensator als Äthylenglykol bei Temperaturen zwischen 10°C und 30°C betriebener Sprühkondensator (16) ausgebildet ist.

15. Vorrichtung nach einem der Ansprüche 11 bis 14, dadurch gekennzeichnet, daß die direkt hinter dem Sprühkondensator (16) angeordnete Dampfstrahlpumpe (30, 33, 17) mit einer Ummantelung versehen ist.

16. Vorrichtung nach einem der Ansprüche 11 bis 15, dadurch gekennzeichnet, daß mehrere Vakuumreaktoren (9, 10, 11) vorgesehen sind, denen jeweils ein Vakuumaggregat (28, 29, 14) zugeordnet ist.

17. Vorrichtung nach einem der Ansprüche 11 bis 16, dadurch gekennzeichnet, daß das Vakuumaggregat mehrstufig ausgebildet ist.

18. Vorrichtung nach einem der Ansprüche 11 bis 17, dadurch gekennzeichnet, daß ein getrennter Mischkondensator (50) zur Totalkondensation und Entgasung der Restbrüden der Wasserdampfstrahlpumpen (32, 37, 21) und des Restdampfes in der Leitung (45) mittels Prozeßwasser vorgesehen ist.

**Claims**

1. Process for the production of high-molecular weight polyesters, in which a pumpable paste is produced in particular from terephthalic acid and alkene diol, said paste being esterified in an esterification stage of a two or multi-stage reactor arrangement and subsequently polycondensed in vacuo in at least one vacuum reactor, characterised in that the process steam from the esterification stage is used to produce the vacuum for at least one vacuum reactor.

2. Process according to claim 1, characterised in that the process steam serving as the driving flow is condensed in the vacuum assembly, the resulting process water being recycled in the circuit as cooling water to the vacuum assembly for condensing the process steam.

3. Process according to claim 1 or 2, characterised in that the process steam from the esterification stage is supplied at a pressure between 0.1 and 8 bar.

4. Process according to claim 3, characterised in that one process water component stream of the circuit is heated and supplied to the reactor arrangement as a return flow.

5. Process according to one of claims 1 to 4, characterised in that the process steam leaving the esterification stage is subdivided into two component streams, one said component stream heating the component stream of the circuit via a heat exchanger.

6. Process according to claim 5, characterised in that the part-condensed process steam leaving the heat exchanger is passed to one of the vacuum assemblies for total condensation.

7. Process according to one of claims 1 to 6, characterised in that the vapours from the respective last vacuum assemblies having steam jet pumps are separately totally condensed and degassed jointly with residual process steam and recycled to the water circuit.

8. Process according to one of claims 1 to 6, characterised in that the process water condensate leaving the vacuum assembly is collected in a barometric collector and degassed and cooled via a cooling tower.

9. Process according to one of claims 1 to 7, characterised in that the process steam is superheated to temperatures above the boiling temperature.

10. Process according to one of claims 1 to 9, characterised in that the steam jet pump of the vacuum assembly having at least one jet pump is electronically heated to 290°C to 330°C.

11. Apparatus for the continuous production of high-molecular weight polyesters in accordance with the process claimed in claim 1, having at least a two-stage reactor system (3, 4, 8) for esterifying in particular terephthalic acid and an alkene diol and at least one vacuum reactor (9, 10, 11) for polycondensation, wherein to produce the vacuum a vacuum assembly (14, 28, 29) is provided in the at least one vacuum reactor, characterised in that the vacuum assembly (14, 28, 29) has at least one steam jet pump (30, 32, 33, 35, 37, 17, 19, 21), which is connected to the reactor system (3, 4, 8) by a steam feeder line (38), and in that upstream of the vacuum assembly (14, 28, 29) are connected spray condensers (16) and/or separators for purifying the process gases or process vapours being drawn off.

12. Apparatus according to claim 11, characterised in that a co-condenser (31, 34, 36, 18, 20) is associated with the steam jet pump, in that a barometric collector (40) is provided for collecting the condensed process steam, said collector (40) being connected to a cooling tower (42), and in that a circuit line (44) linked to the cooling tower (42) is provided to return the resulting process water to the co-condensers.

13. Apparatus according to claim 11 or 12, characterised in that a further line (45) leading at least to one co-condenser (31, 34, 36, 18, 20) is linked to the reactor system (3, 4), a heat exchanger (46) being connected to said line (45), and a branch line (47) passing from the circuit line (44) through the heat exchanger (46) and opening out in the reactor system (3, 4).

14. Apparatus according to one of claims 11 to 13, characterised in that the spray condenser connected between the vacuum reactor (9, 10, 11) and the vacuum assembly (28, 29, 14) is in the form of a spray condenser (16) operating on ethylene glycol at temperatures between 10°C and 30°C.

15. Apparatus according to one of claims 11 to 14, characterised in that the steam jet pump (30, 33, 17) disposed directly behind the spray condenser (16) is provided with a casing.

16. Apparatus according to one of claims 11 to 15, characterised in that a plurality of vacuum reactors (9, 10, 11) are provided, with each of which a vacuum assembly (28 , 29, 14) is associated.

17. Apparatus according to one of claims 11 to 16, characterised in that the vacuum assembly is a multi-stage assembly.

18. Apparatus according to one of claims 11 to 17, characterised in that a separate co-condenser (50) is provided for total condensation and degassing of the residual vapours from the steam jet pumps (32, 37, 21) and of the residual steam in the line (45) using process water.

**Revendications**

1. Procédé pour la fabrication de polyester à haut poids moléculaire, dans lequel on obtient une pâte susceptible d'être pompée, en particulier à partir d'acide téréphtalique et d'alkyldiols, pâte qui est estérifiée dans un étage d'estérification d'une installation de transformation à un ou plusieurs étages et est ensuite polycondensée dans au moins un réacteur sous vide, caractérisé en ce que le vide est obtenu au moyen de la vapeur d'eau de transformation provenant de l'étage d'estérification, pour au moins l'un des réacteurs sous vide.

2. Procédé suivant la revendication 1, caractérisé en ce que la vapeur issue de la transformation est utilisée comme courant propulseur, est condensée dans le groupe à faire le vide, l'eau de transformation qui en résulte étant ramenée à nouveau en circuit fermé comme eau de refroidissement au groupe à vide en vue de la condensation de la vapeur issue de la transformation.

3. Procédé suivant l'une quelconque des revendications 1 ou 2, caractérisé en ce que la vapeur issue de la transformation provenant de l'étage d'estérification est amenée sous une pression comprise entre 0,1 et 8 bars.

4. Procédé suivant la revendication 3, caractérisé en ce qu'une partie de l'eau issue de la transformation est réchauffée et ramenée en circuit fermé comme courant de retour à l'installation de transformation.

5. Procédé suivant l'une quelconque des revendications 1 à 4, caractérisé en ce que la vapeur issue de la transformation et en provenance de l'étage d'estérification, est partagée en deux courants partiels, l'un d'entre eux réchauffant le courant partiel du circuit fermé au moyen d'un échangeur de chaleur.

6. Procédé suivant la revendication 5 ci-dessus, caractérisé en ce que la vapeur issue de la transformation et partiellement condensée provenant de l'échangeur de chaleur, est amenée à l'un des groupes à vide en vue de sa condensation totale.

7. Procédé suivant l'une quelconque des revendications 1 à 6, caractérisé en ce que les vapeurs en provenance des dernières pompes à jet de vapeur correspondant aux groupes à vide respectifs, sont condensées totalement et dégazées séparément, en commun avec des résidus de vapeurs issues de la transformation, pour être ensuite ramenées à nouveau dans le circuit d'eau.

8. Procédé suivant l'une quelconque des revendications 1 à 6, caractérisé en ce que l'eau condensée issue de la transformation et sortant du groupe à vide, est collectée dans un réservoir de réception barométrique et en ce qu'elle est dégazée et refroidie dans une tour de refroidissement.

9. Procédé suivant l'une quelconque des revendications 1 à 7, caractérisé en ce que la vapeur issue de la transformation est surchauffée jusqu'à une température dépassant la température d'ébullition.

10. Procédé suivant l'une quelconque des revendications 1 à 9, caractérisé en ce que la pompe à jet de vapeur correspondant au groupe à vide pourvu d'au moins une pompe à jet, est chauffée jusqu'à une température située entre 290°C et 330°C.

11. Dispositif pour la fabrication en continu de polyester à haut poids moléculaire conforme au procédé suivant la revendication 1, présentant au moins un système à réaction (3, 4, 8) à deux étages pour l'estérification en particulier d'acide téréphtalique et d'un alkyldiol, et au moins un réacteur sous vide (9, 10, 11) pour la polycondensation, un groupe à vide (14, 28, 29) étant prévu dans ledit réacteur sous vide pour l'obtention du vide, caractérisé en ce que le groupe à vide (14, 18, 29) présente au moins une pompe à vide à jet de vapeur d'eau (30, 32, 33, 35, 37, 17, 19, 21) qui est reliée au système de réaction (3, 4, 8) au moyen d'une canalisation (38) d'alimentation en vapeur et en ce que des condenseurs à pulvérisation (16) et/ou des séparateurs sont disposés devant le groupe à vide (14, 28, 29) pour épurer les gaz ou les vapeurs à aspirer provenant de la transformation.

12. Dispositif suivant la revendication 11, caractérisé en ce qu'un condenseur-mélangeur (31, 34, 36, 18, 20) est adjoint à la pompe à jet de vapeur d'eau, en ce qu'un réservoir récepteur barométrique (40), relié à une tour de refroidissement (42), est prévu pour collecter la vapeur d'eau condensée issue de la transformation, et en ce qu'une canalisation de retour (44) en circuit fermé, raccordée à ladite tour de refroidissement (42), est prévue pour ramener aux condenseurs mélangeurs l'eau issue de la transformation et récupérée.

13. Dispositif suivant l'une quelconque des revendications 11 ou 12, caractérisé en ce qu'au moins une canalisation (45) supplémentaire conduisant à au moins un condenseur mélangeur (31, 34, 36, 18, 20) est raccordée au système de réaction (3, 4), canalisation qui traverse un échangeur de chaleur (46), lui-même traversé par une canalisation de dérivation (47) du conduit de retour (44) du circuit fermé, débouchant dans le système de réaction (3, 4).

14. Dispositif suivant l'une quelconque des revendications 11 à 13, caractérisé en ce que le condenseur à pulvérisation raccordé entre le réacteur sous vide (9, 10, 11) et le groupe à vide (28, 29, 14) est constitué par un condenseur à pulvérisation (16) d'éthylène glycol fonctionnant à des températures comprises entre 10°C et 30°C.

15. Dispositif suivant l'une quelconque des revendications 11 à 14, caractérisé en ce que la pompe à jet de vapeur (30, 33, 17) disposée immédiatement derrière le condenseur à pulvérisation (16), est munie d'une enveloppe.

16. Dispositif suivant l'une quelconque des revendications 11 à 15 ci-dessus, caractérisé en ce que de multiples réacteurs sous vide (9, 10, 11) sont prévus, chacun d'eux étant équipé d'un groupe à vide (28, 29, 14).

17. Dispositif suivant l'une quelconque des revendications 11 à 16, caractérisé en ce que le groupe à vide comporte plusieurs étages.

18. Dispositif suivant l'une quelconque des revendications 11 à 17, caractérisé en ce qu'un condenseur-mélangeur (50) distinct, fonctionnant avec l'eau issue de la transformation, est prévu en vue de la condensation totale et du dégazage des restes de vapeurs provenant des pompes à jet de vapeur d'eau (32, 37, 21) et du reste de vapeur issue de la canalisation (45).

Fig. 1

Fig. 2

Fig. 3